# DEMANDE DE BREVET EUROPEEN

(11) **EP 4 560 293 A2**
(43) Date de publication de la demande: **28.05.2025**
(21) Numéro de dépôt: 24213653.9
(22) Date de dépôt: 18.11.2024
(51) Int. Cl.: G01N 17/04, G01N 3/56

(54) **DISPOSITIF DE SUPPORT D'ÉCHANTILLON POUR ESSAIS THERMO-ÉROSIF**

(30) Priorité: 23.11.2023 FR 2312919
(71) Demandeur: ARIANEGROUP SAS, 78130 Les Mureaux (FR)
(72) Inventeur: PINAUD, Grégory, 33185 LE HAILLAN (FR); HARAS, Kevin, 33185 LE HAILLAN (FR); VAN OOTEGEM, Bruno, 33185 LE HAILLAN (FR); GROH, Bernard, 33185 LE HAILLAN (FR)
(74) Mandataire: Cabinet Beau de Loménie

(57) **Abrégé**

Un dispositif de support d'échantillon (400) pour essais thermo-érosif s'étend en longueur suivant axe longitudinal (X) entre un tronçon arrière (100) et un tronçon avant (300). Le tronçon avant comporte une section de nez (310) à une extrémité libre du dispositif de support d'échantillon. La section de nez (310) comprend un logement (311) destiné à recevoir un échantillon (10) à tester. Le logement s'étend suivant un plan (P₃₂₀) formant un angle (a₃₂₀) non perpendiculaire avec l'axe longitudinal (X). La section de nez (310) comporte une cavité interne rayonnante (315) dans laquelle débouche ledit logement.

## Description

### Domaine Technique

La présente invention concerne le domaine des moyens d'essai et de modélisation permettant de caractériser le comportement thermo-érosif de matériaux dans des conditions représentatives de celles auxquelles ils seront soumis dans leur environnement réel d'utilisation "échelle 1" (grandeur nature).

### Technique antérieure

Afin de reproduire des conditions ou charges aérothermiques similaires à celles rencontrées dans l'environnement réel d'utilisation d'un matériau, comme par exemple lors d'une exposition à des gaz de combustion ou des flux thermiques lors d'une rentrée atmosphérique, il est connu d'utiliser des bancs ou systèmes de test dans lesquels un matériau à tester est soumis à un flux de plasma censé reproduire les flux thermiques rencontrés dans l'environnement réel d'utilisation du matériau.

Le document US2013121368 divulgue un système d'évaluation de fatigue thermomécanique d'un matériau soumis à un flux thermique élevé utilisant une torche à plasma.

Le comportement thermo-érosif d'un matériau correspond à l'évaluation de sa capacité à résister aux températures et aux efforts aérodynamiques rencontrés dans un propulseur fusée.

Même en utilisant un flux de plasma, les bancs ou systèmes de tests actuels montrent des limites techniques, par exemple en termes de puissance ou de pression, qui empêchent d'atteindre les conditions réellement rencontrées dans l'environnement d'utilisation du matériau. C'est notamment le cas pour la température et les contraintes en cisaillement (ablation) qui sont des paramètres déterminants pour l'évaluation du comportement thermo-érosif du matériau à tester.

En conséquence, pour qualifier un nouveau matériau, il est nécessaire d'utiliser plusieurs installations coûteuses afin de pouvoir simuler les différentes conditions que le matériau est destiné à rencontrer dans son environnement d'utilisation réel.

Il existe, par conséquent, un besoin pour permettre la réalisation d'essais à moindre coût, c'est-à-dire à une échelle réduite et sans avoir besoin de recourir à des installations complexes et coûteuses.

### Exposé de l'invention

La présente invention a donc pour but de proposer une solution pour des essais à échelle réduite qui permet de caractériser de façon fiable le comportement thermo-érosif d'un matériau, ce comportement étant représentatif de celui dans les conditions réelles d'utilisation.

A cet effet, la présente invention propose un dispositif de support d'échantillon pour essais thermo-érosif s'étendant en longueur suivant axe longitudinal entre un tronçon arrière et un tronçon avant, le tronçon avant comportant une section de nez à une extrémité libre du dispositif de support d'échantillon, la section de nez comprenant un logement destiné à recevoir un échantillon à tester, le logement s'étendant suivant un plan formant un angle non perpendiculaire avec l'axe longitudinal, la section de nez comporte une cavité interne rayonnante dans laquelle débouche ledit logement.

La cavité rayonnante permet d'augmenter la température de l'échantillon présent dans le logement et de le tester à des températures plus élevées que celles qui peuvent être atteintes avec des dispositifs de support conventionnels. Il est ainsi possible de se rapprocher au plus près des conditions extrêmes de température qui peuvent être rencontrées en environnement réel d'utilisation.

En outre, le logement destiné à recevoir l'échantillon à tester est orienté de telle manière qu'il est possible d'obtenir une vitesse d'écoulement d'un flux de plasma non nulle sur la surface de l'échantillon et de créer ainsi des contraintes en cisaillement sur la surface de l'échantillon proches de celles rencontrées dans son environnement réel d'utilisation.

Le dispositif de support d'échantillon de l'invention est remarquable en ce qu'il permet de reconstituer des conditions de thermo-érosion proches de celles qui seront réellement rencontrées par le matériau de l'échantillon. Le dispositif de support de l'invention permet, par conséquent, d'améliorer la précision des tests à échelle réduite.

Selon un aspect particulier du dispositif de support de l'invention, la section de nez est en matériau présentant une émissivité supérieure ou égale à 0,7.

Selon un autre aspect particulier du dispositif de support de l'invention, la section de nez est en matériau à base de carbone.

Selon une caractéristique particulière du dispositif de support de l'invention, celui-ci comprend en outre un tronçon intermédiaire interposé entre le tronçon arrière et le tronçon avant. Le tronçon intermédiaire est de préférence en un matériau isolant thermiquement.

Selon un autre aspect particulier du dispositif de support de l'invention, le tronçon arrière comprend un passage interne débouchant dans la cavité interne rayonnante de la section de nez.

L'invention a également pour objet une installation d'essai thermo-érosif comprenant une chambre de test et une soufflerie à flux de plasma débouchant dans la chambre de test de manière à envoyer un flux de plasma dans ladite chambre de test, caractérisée en ce qu'elle comprend en outre un dispositif de support selon l'invention présent dans la chambre de test, la section de nez dudit dispositif de support étant positionnée sur le trajet du flux de plasma.

L'installation d'essai thermo-érosif de l'invention permet de reconstituer des conditions de thermo-érosion proches de celles qui seront réellement rencontrées par le matériau de l'échantillon et d'améliorer ainsi la précision des tests à échelle réduite.

Selon une caractéristique particulière de l'installation de l'invention, celle-ci comprend en outre une source de rayonnement thermique dirigée sur le logement de la section de nez du dispositif de support. Cela permet d'accroître encore la température de l'échantillon durant les tests si nécessaire. La source de rayonnement thermique peut être notamment une source de faisceau laser.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 est une vue schématique en perspective d'un dispositif de support d'échantillon selon un mode de réalisation de l'invention,
[Fig. 2] La figure 2 est une vue schématique en coupe du dispositif de support d'échantillon de la figure 1,
[Fig. 3] La figure 3 est une vue schématique éclatée du dispositif de support d'échantillon de la figure 1,
[Fig. 4] La figure 4 est une vue schématique en coupe montrant le dispositif de support d'échantillon de la figure 1 lorsqu'il est soumis à un flux de plasma,
[Fig. 5] La figure 5 est une vue schématique d'une installation d'essai thermo-érosif selon un mode de réalisation de l'invention.

### Description des modes de réalisation

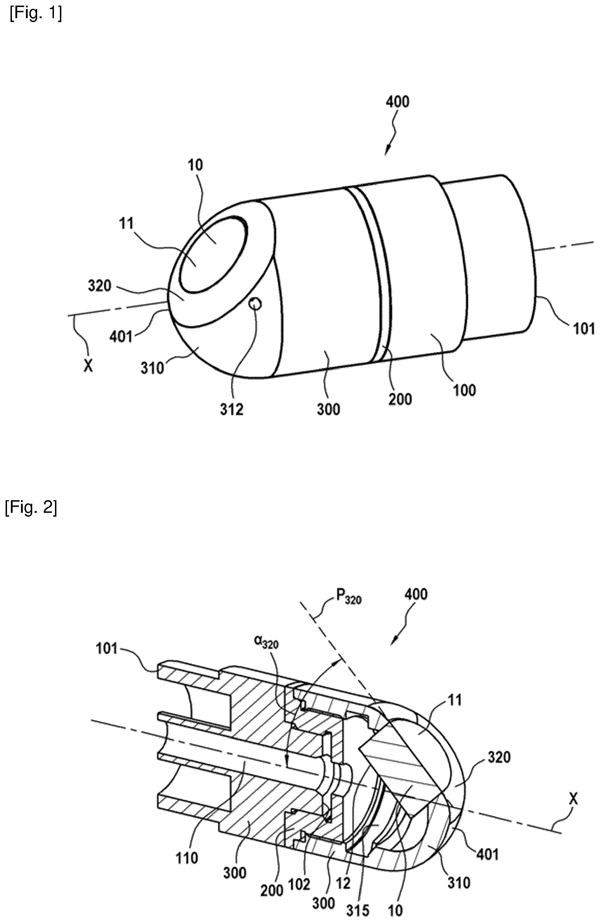

Les figures 1 à 3 illustrent un dispositif de support d'échantillon 400 pour essais thermo-érosif selon un mode de réalisation de l'invention. Le dispositif de support d'échantillon 400 s'étend en longueur suivant un axe longitudinal X et comprend, un tronçon arrière 100, un tronçon intermédiaire 200 et un tronçon avant 300. Le tronçon arrière 100 est destiné à être relié à un des moyens de maintien d'une installation d'essai thermo-érosif comme décrit en détails ci-après.

Le tronçon avant 300 comporte une section de nez 310 à une extrémité libre 401 du dispositif de support d'échantillon 400, la section de nez 310 supporte un échantillon 10 d'un matériau à tester.

La section de nez 310 est destinée à recevoir un flux de plasma lors des essais thermo-érosifs du matériau 10 à tester. La section de nez 310 présente une section se rétrécissant progressivement vers l'extrémité libre 401.

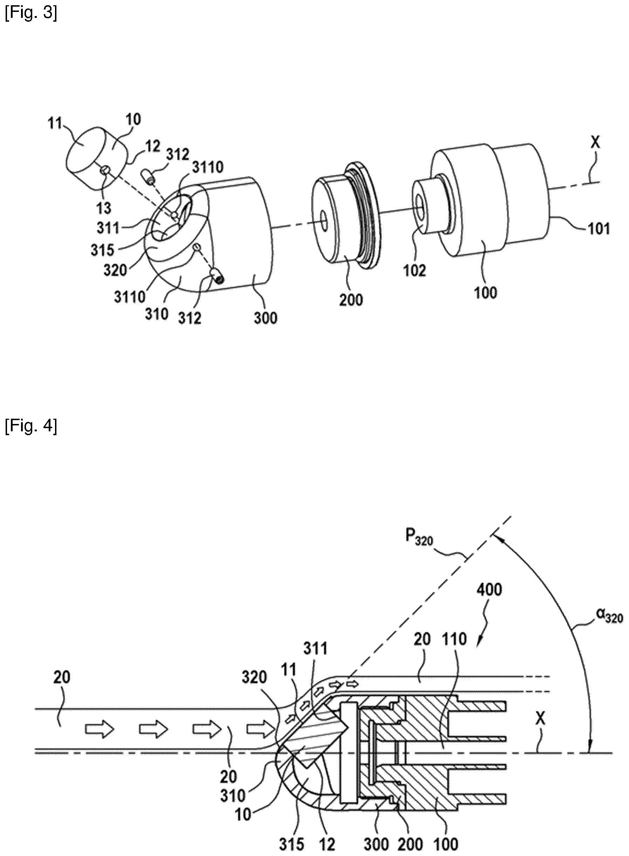

Comme illustrée sur la figure 3, la section de nez 310 comprend un logement 311 destiné à recevoir l'échantillon 10 de matériau à tester. Dans l'exemple décrit ici, le logement 311 présente une forme circulaire adaptée à la forme de pastille de l'échantillon 10. La forme du logement ainsi que la forme de l'échantillon n'est toutefois pas limitée à une forme circulaire et peut avoir différentes autres formes comme par exemple carrée ou rectangulaire.

Toujours dans l'exemple décrit ici, l'échantillon 10 du matériau à tester est maintenu dans le logement 311 par des pions 312 insérés chacun dans des passages 3110 et 13 réalisés respectivement dans la section de nez 311 et dans l'échantillon 10. D'autres moyens de maintien que des pions peuvent bien entendu être envisagés sans sortir du cadre de l'invention.

Selon une caractéristique particulière du dispositif de support d'échantillon de l'invention, la section de nez 310 comporte une surface plane 320 s'étendant suivant un plan P₃₂₀ formant un angle α₃₂₀ avec l'axe longitudinal X (figures 2 et 4), la surface plane 320 entourant le logement 311. Le logement 311 s'étend également suivant le plan P₃₂₀ formant l'angle α₃₂₀ avec l'axe longitudinal X. Le plan P₃₂₀ définit également la direction d'extension de la surface 11 de l'échantillon 10 maintenu dans le logement 311 qui est destinée à être exposée au flux de plasma lors des tests de thermo-érosion.

L'angle α₃₂₀ est d'une manière générale inférieure à 90° afin que la surface plane 320 et la surface 11 de l'échantillon 10 ne soient pas perpendiculaires à l'axe longitudinal X du dispositif de support d'échantillon 400. En alignant l'axe longitudinal X du dispositif de support d'échantillon 400 avec la direction d'un flux de plasma lors des tests, il est possible d'obtenir une vitesse d'écoulement du flux de plasma non nulle sur la surface 11 de l'échantillon 10 et de créer ainsi des contraintes en cisaillement sur la surface de l'échantillon, ce qui n'est pas possible lorsque la surface exposée de l'échantillon s'étend perpendiculairement à la direction du flux de plasma. La vitesse d'écoulement du flux de plasma sur la surface de l'échantillon et, par conséquent, le niveau de contrainte en cisaillement appliqué, est fonction de la valeur de l'angle α₃₂₀ pour une vitesse initiale de flux donnée. La valeur de l'angle α₃₂₀ est de préférence comprise entre 20° et 60°.

Selon une autre caractéristique particulière du dispositif de support d'échantillon de l'invention, la section de nez 310 est une pièce évidée qui comporte une cavité interne rayonnante 315 dans laquelle débouche de logement 311 et, par conséquent, l'échantillon 10 lorsqu'il est maintenu dans le logement 311. La cavité rayonnante permet d'augmenter la température de l'échantillon pendant les essais par rapport à un support d'échantillon standard comme expliqué ci-après.

La figure 4 illustre le dispositif de support d'échantillon 400 avec l'échantillon 10 lors d'un essai thermo-érosif au cours duquel la section de nez 310 reçoit un flux de plasma 20. Le flux de plasma 20 est utilisé pour récréer les conditions de température et d'érosion (charge de cisaillement) auxquels le matériau de l'échantillon sera soumis dans son environnement d'utilisation réel. Le flux de plasma 20 peut par exemple servir à recréer les conditions de températures rencontrées par un matériau lorsqu'il est exposé à un écoulement de gaz de combustion dans un lanceur ou à un écoulement hypersonique lors d'une rentrée atmosphérique.

Concernant le paramètre de la température permettant de récréer les conditions de température rencontrées dans l'environnement d'utilisation réel, la surface 11 de l'échantillon 10 reçoit le flux de plasma 11 qui transmet sa chaleur à l'échantillon. En outre, lorsque la section de nez 310 est soumise au flux de plasma 20, la température dans la cavité rayonnante 315 augmente considérablement. Il est ainsi possible de transmettre de la chaleur supplémentaire par rayonnement à l'échantillon 10 du côté de son autre surface 12 présente dans la cavité et d'augmenter, en conséquence, la température globale de l'échantillon. Cela permet de tester des matériaux à des températures plus élevées que celles qui peuvent être atteintes avec des dispositifs de support conventionnels. En outre, avec le dispositif de support de l'invention, on réduit considérablement le gradient de température entre la surface 11 de l'échantillon 10 exposée au flux de plasma 20 et la surface opposée 11 de l'échantillon. Cette homogénéisation de la température de l'échantillon permet une caractérisation plus fiable du comportement en température du matériau testé.

Concernant le paramètre d'érosion ou de cisaillement permettant de récréer les efforts de cisaillement rencontrés dans l'environnement d'utilisation réel, le maintien de la surface 11 exposée de l'échantillon suivant un plan P₃₂₀ formant un angle α₃₂₀ non perpendiculaire avec l'axe longitudinal X du dispositif de support 400 et en alignant la direction du flux de plasma 20 avec l'axe longitudinal X, il est possible d'obtenir une vitesse d'écoulement du flux de plasma non nulle sur la surface 11 de l'échantillon 10 et de recréer ainsi les contraintes en cisaillement rencontrées par un matériau lorsqu'il est exposé à un écoulement de gaz de combustion dans un propulseur d'un lanceur ou à un écoulement hypersonique lors d'une rentrée atmosphérique.

Dans l'exemple décrit ici, le dispositif de support d'échantillon 400 comprend un tronçon arrière 100 s'étendant entre une première extrémité 101 destiné à la fixation du dispositif de support d'échantillon dans une installation d'essai thermo-érosif et une deuxième extrémité 102 présente du côté du tronçon avant 300. Le tronçon arrière 100 comporte en outre un passage 110 débouchant dans la cavité rayonnante 315 de la section de nez 310 du tronçon avant 300 qui permet d'installer une instrumentation, comme par exemple un capteur de pyromètre ou par exemple de thermocouple, à l'intérieur du dispositif de support de l'échantillon et en particulier au niveau de la cavité rayonnante. Cela permet d'obtenir des informations supplémentaires sur les conditions auxquelles est soumis l'échantillon dans la cavité rayonnante.

Toujours dans l'exemple décrit ici, un tronçon intermédiaire 200 est interposé entre le tronçon arrière 100 et le tronçon avant 300. Le tronçon intermédiaire 200 a pour fonction principale d'isoler ou de découpler thermiquement le tronçon avant 300 du tronçon arrière 100. On ne sort pas du cadre de l'invention lorsque le dispositif de support d'échantillon ne comprend que le tronçon arrière et le tronçon avant. Le tronçon arrière peut en outre être refroidi.

Le tronçon arrière 100 peut être notamment réalisé en un des matériaux suivants : cuivre, titane, tungstène et acier réfractaire. Le tronçon intermédiaire 200 peut être notamment réalisé en un des matériaux suivants : composites carbone-phénolique composite silice-phénolique, graphite, tungstène et carbure de tantale.

Le tronçon avant 300 comportant la section de nez 310 munie de la cavité rayonnante 315 est réalisé avec un matériau présentant une émissivité supérieure ou égale à 0,7, afin d'optimiser la capacité de la paroi de la section de nez à absorber la chaleur transmise par le flux de plasma et à la réémettre par rayonnement dans la cavité rayonnante. Le tronçon avant ou au moins la section de nez peut être notamment réalisé en un des matériaux suivants : matériau composite carbone/carbone (C/C), graphite extrudé, carbure de tungstène, carbure de tantale, graphite et tungstène.

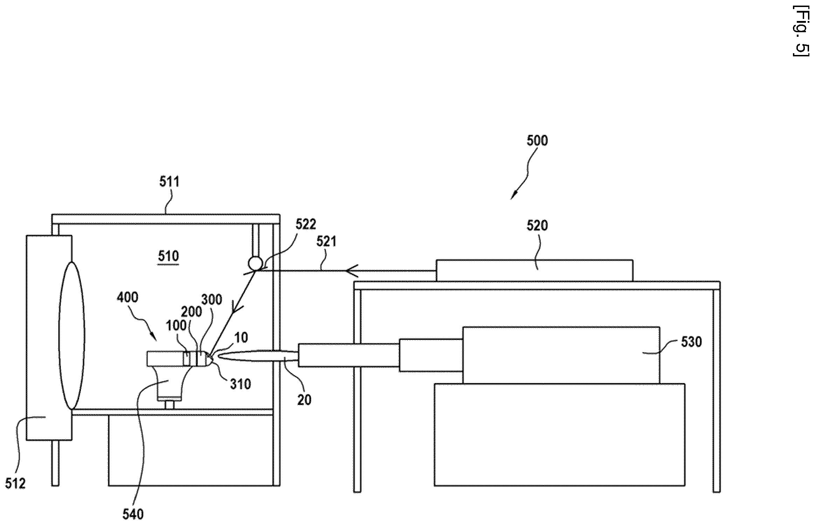

La figure 5 illustre une installation d'essai thermo-érosif 500 selon un mode de réalisation de l'invention. L'installation d'essai thermo-érosif 500 comprend une chambre de test 510 délimitée par une enceinte 511 comprenant une paroi arrière 512 refroidie et une soufflerie à flux de plasma 530 débouchant dans la chambre de test de manière à envoyer un flux de plasma 20 dans la chambre de test 510.

L'installation 500 comprend en outre le dispositif de support 400 équipé de l'échantillon 10 comme décrit précédemment, le dispositif de support 400 étant maintenu dans la chambre de test 510 par un bras 540 de manière à ce que la section de nez 310 du tronçon avant 300 du dispositif de support 400 soit positionnée sur le trajet du flux de plasma 20 comme illustré sur la figure 4.

Selon une caractéristique particulière de l'installation d'essai thermo-érosif, celle-ci peut comprendre en outre une source de rayonnement thermique dirigée sur le logement de la section de nez du dispositif de support de manière à accroître encore la température de l'échantillon durant les tests. Dans l'exemple décrit ici, l'installation 500 comprend une source de rayonnement 520 émettant un rayon thermique 521 qui est dirigé par un réflecteur 522 sur la surface 11 de l'échantillon présent dans la chambre de test 510. La source de rayonnement thermique peut être une source de faisceau laser, une source de rayon infrarouge ou toute autre source apte à générer un rayonnement thermique qui peut être dirigé sur l'échantillon.

Le dispositif de support d'échantillon et l'installation d'essai thermo-érosif trouvent une application avantageuse mais non limitative dans les tests de matériaux destinés à être utilisés dans le domaine aérospatial comme par exemple dans des lanceurs réutilisables à propulsion solide, des engins hypersoniques, des véhicules ou corps de rentrée atmosphérique, etc. Les matériaux à tester peuvent notamment être des matériaux composites carbone/carbone utilisés pour former des parties de tuyères de propulseurs ou des protections/boucliers thermiques. D'autres matériaux tels que notamment les composites carbone phénolique, composites silice phénolique ou composites à base de liège peuvent être testés avec dispositif de support d'échantillon et l'installation d'essai thermo-érosif de l'invention.

## Revendications

1. Dispositif de support d'échantillon (400) pour essais thermo-érosif s'étendant en longueur suivant axe longitudinal (X) entre un tronçon arrière (100) et un tronçon avant (300), le tronçon avant comportant une section de nez (310) à une extrémité libre (401) du dispositif de support d'échantillon, la section de nez (310) comprenant un logement (311) destiné à recevoir un échantillon (10) à tester, le logement s'étendant suivant un plan (P₃₂₀) formant un angle (α₃₂₀) non perpendiculaire avec l'axe longitudinal (X), la section de nez (310) comporte une cavité interne rayonnante (315) dans laquelle débouche ledit logement.

2. Dispositif de support selon la revendication 1, dans lequel la section de nez (310) est en matériau présentant une émissivité supérieure ou égale à 0,7.

3. Dispositif de support selon la revendication 1, dans lequel la section de nez (310) est en matériau à base de carbone.

4. Dispositif de support selon la revendication 1 ou 2, comprenant en outre un tronçon intermédiaire (200) interposé entre le tronçon arrière (100) et le tronçon avant (300).

5. Dispositif de support selon la revendication 4, dans lequel le tronçon intermédiaire (200) est en un matériau isolant thermiquement.

6. Dispositif de support selon l'une quelconque des revendications 1 à 5, dans lequel le tronçon arrière comprend un passage interne débouchant dans la cavité interne rayonnante de la section de nez.

7. Installation d'essai thermo-érosif (500) comprenant une chambre de test (510) et une soufflerie à flux de plasma (530) débouchant dans la chambre de test de manière à envoyer un flux de plasma (20) dans ladite chambre de test,
**caractérisée en ce qu'**elle comprend en outre un dispositif de support (400) selon l'une quelconque des revendications 1 à 6 présent dans la chambre de test (510), la section de nez (310) dudit dispositif de support étant positionnée sur le trajet du flux de plasma (20).

8. Installation d'essai thermo-érosif selon la revendication 7, comprenant en outre une source de rayonnement thermique (520) dirigée sur le logement (311) de la section de nez (310) du dispositif de support d'échantillon (400).

9. Installation selon la revendication 8, dans lequel la source de rayonnement thermique (520) est une source de faisceau laser.
